# FASCICULE DE BREVET EUROPEEN

(11) **EP 1 101 830 B1**
(45) Date de publication et mention de la délivrance du brevet: **15.06.2005**
(21) Numéro de dépôt: 00420230.5
(22) Date de dépôt: 09.11.2000
(51) Int. Cl.: C22B 21/00, C22B 7/00

(54) **Procédé de fabrication de demi-produits en alliages d'aluminium utilisant des matières premières recyclées**
Verfahren zur Herstellung von Halbzeugen aus Aluminiumlegierungen unter Verwendung von wiederverwertetem Schrott
Process of making semi-finished products consisting of aluminium alloys by using recycled scrap materials

(30) Priorité: 15.11.1999 FR 9914281
(43) Date de publication de la demande: 23.05.2001
(73) Titulaire: Pechiney Rhenalu, 75116 Paris (FR)
(72) Inventeur: Verdier, Jean-Francois, 63500 Issoire (FR); Leroy, Michel, 38120 St. Egrève (FR); Calaque, Laurent, 38000 Grenoble (FR)
(74) Mandataire: Marsolais, Richard

(56) Documents cités:
- EP-A- 0 099 948
- EP-A- 0 289 294
- EP-A- 0 745 693
- GB-A- 2 220 214
- US-A- 4 159 907

## Description

### Domaine de l'invention

L'invention concerne la fabrication de produits et de demi-produits en alliage d'aluminium, tels que des plaques de laminage, billettes de filage ou des tôles, à partir de matières premières pour recyclage, tels que des copeaux ou des chutes d'usinage. L'invention concerne tout particulièrement la fabrication de produits et demi-produits en alliages de la série 7000 de l'Aluminium Association et de la norme européenne EN 573-3 (ou de toute autre spécification), c'est-à-dire des alliages Al-Zn-Mg et Al-Zn-Mg-Cu, et notamment ceux destinés à l'industrie aéronautique.

### Etat de la technique et problème posé

Dans plusieurs industries, les procédés de fabrication de produits métalliques finis par usinage, transformation, découpage,... de produits intermédiaires génèrent des quantités importantes de copeaux et de chutes d'usinage. Dans la suite du texte, le terme "chutes et copeaux" (connus notamment sous le nom de "scrap" en langue anglaise) correspondra aux excédents de matière retirés des produits intermédiaires au cours des procédés de fabrication par des opérations de tournage, de décolletage, de rabotage, de fraisage, de surfaçage, de détourage, de perçage, de taraudage, de filetage, de sciage, d'alésage, ou d'usinage de finition, ou des opérations similaires. Le terme "chutes et copeaux" désigne ici aussi bien les morceaux de petites dimensions (ou "excédents divisés"), tels que les copeaux, que les morceaux de plus grandes dimensions, tels que les chutes de découpe ou les squelettes de découpe de tôles minces ou épaisses, de profilés, de plaques, de billettes,...

Pour des raisons pratiques et de coûts, notamment dans le cas des excédents dits "divisés" (c'est-à-dire les chutes et copeaux de petite dimension, tels que les copeaux), les chutes et copeaux sont généralement mis de côté en vrac, sans distinguer les alliages. Par conséquent, bien que les chutes et copeaux à base d'aluminium soient en principe tous recyclables, ceux-ci sont le plus souvent déclassés, et donc dépréciés, et recyclés en tant qu'aluminium "tout venant". Or, dans certaines industries, telles que l'industrie aéronautique, les produits métalliques intermédiaires possèdent une forte valeur intrinsèque provenant en grande partie de la composition même de leur alliage spécifique, de sorte que la dépréciation des chutes et copeaux grève les coûts de production des produits finis. Par ailleurs, la composition souvent particulière de ces alliages peut ne pas être facilement compatible avec leur recyclage dans des alliages de corroyage moins chargés en éléments d'addition, et notamment dans des alliages de corroyage appartenant à d'autres familles, ce qui induit des contraintes technico-énonomiques lors de la constitution du lit de fusion de ces alliages, lorsque l'on veut utiliser du scrap provenant des alliages aéronautiques de la famille 7000.

L'industrie aéronautique utilise un grand nombre d'alliages d'aluminium, qui se trouvent essentiellement dans les séries 1000, 2000 et 7000 de l'Aluminium Association et de la norme européenne EN 573-3. Par exemple, dans la seule série 7000, cette industrie utilise notamment les alliages 7010, 7040, 7050, 7075, 7150, 7175 et 7475. Dans ces conditions, il est difficilement envisageable, pour des raisons de coûts, d'organisation et de gestion des stocks, de stocker séparément les chutes et copeaux en ces différents alliages. Les stocks de chutes et copeaux d'usinage sont donc, en général, très hétérogènes et de composition variable. De surcroît, même si un tri des chutes et copeaux était prévu entre les alliages, il serait difficile d'empêcher toute pollution accidentelle de stocks de chutes et copeaux en un alliage donné par des chutes et copeaux provenant d'autres alliages de la même série ou de séries différentes.

Par ailleurs, la composition des alliages diffère de manière significative, même à l'intérieur d'une série d'alliages donnée, ce qui interdit généralement de recycler pêle-mêle les chutes et copeaux d'usinage pour fabriquer les produits en alliage chargé spécifique. Ainsi, la pratique industrielle des usines de transformation consiste à fabriquer de tels produits en n'utilisant que des alliages élaborés à partir de bases relativement pures ou faiblement alliées mises au titre par ajouts des éléments d'alliage spécifiques, et/ou à partir de chutes et copeaux répertoriés de grande dimension en alliage spécifique au titre issus de la production même de l'usine, tels que les peaux de scalpage des plaques ou des rebuts de laminage. Cette pratique industrielle assure une grande maîtrise des alliages chargés spécifiques, ce qui permet d'éviter, notamment, des évolutions aléatoires de la composition des produits obtenus.

Ce problème revêt une importance particulière pour les alliages de la série 7000 destinés à l'industrie aéronautique à cause, notamment, du grand nombre de nuances utilisé. D'une part, la composition assez complexe de ces alliages doit se maintenir dans des fourchettes étroites. D'autre part, ces alliages possèdent des teneurs très différentes en zirconium et en chrome, qui sont des éléments anti-recristallisants dont il est impératif de respecter la teneur dans l'alliage final.

La demanderesse a donc recherché un procédé de fabrication de produits intermédiaires en alliages de la série 7000 selon la norme de l'Aluminium Association ou du CEN (EN 573-3), ou de toute autre spécification, utilisant des chutes et copeaux d'usinage de produits en alliages de cette série, qui préserve les avantages de la pratique industrielle actuelle et qui ne grève pas les coûts de fabrication de manière rédhibitoire.

### Description de l'invention

Selon l'invention, le procédé de fabrication d'un produit intermédiaire, tel qu'une plaque de laminage, une billette de filage, un bloc de forge ou un lingot, en un alliage déterminé de la série 7000 (de l'Aluminium Association, de la norme européenne EN 573-3 ou de toute autre spécification), ledit alliage déterminé ayant une teneur visée en au moins un premier élément anti-recristallisant, dit "élément Z1", choisi dans le groupe constitué de Zr et Cr, est caractérisé en ce qu'il comprend :
- l'approvisionnement en produits pour recyclage (ou "scrap") comprenant des produits pour recyclage (scrap) en différents alliages de la série 7000 incluant au moins un deuxième alliage de la série 7000 ayant une teneur visée en au moins un deuxième élément anti-recristallisant, dit "élément Z2", choisi dans le groupe constituté de Zr et Cr, supérieure à la teneur maximale acceptée dans ledit alliage déterminé ;
- au moins un raffinage desdits produits pour recyclage (scrap) permettant de réduire la teneur en ledit deuxième élément anti-recristallisant jusqu'à une valeur inférieure à la teneur maximale acceptée dans ledit alliage déterminé ;
- l'élaboration d'un lot de métal liquide au titre dont une partie provient du métal épuré issu du raffinage ;
- la formation dudit produit intermédiaire par coulée dudit métal liquide au titre.

L'expression « produits pour recylage » désigne ici des matériaux en aluminium ou alliages d'aluminium résultant de la collecte ou de la récupération de métaux à différentes étapes de fabrication ou de produits finis ou intermédiaires après utilisation, pour être réutilisés pour la production d'alliages d'aluminium. L'homme du métier utilise également le mot « scrap », au singulier, ou l'expression « matières premières pour recyclage » pour désigner lesdits produits pour recyclage. Le terme « scrap de production » désigne du scrap provenant de la production et de la fabrication de produits en aluminium, tandis que le scrap provenant de produits après utilisation est appelé « scrap de récupération ».

Dans le cadre de la présente invention, lesdits produits pour recyclage sont typiquement constitués de scrap de production provenant de la fabrication de produits finis par usinage, transformation, découpage,... dudit produit intermédiaire. Ledit scrap de production est le plus souvent essentiellement constitué de chutes et copeaux (c'est-à-dire à hauteur d'au moins 90 %, voire 95 %), tels que des chutes, copeaux d'usinage et tournures. Ledit scrap de production peut également comprendre des produits de récupération, notamment des produits rebutés tels que des produits intermédiaires endommagés (par exemple en cours de production ou de transport). Lesdits produits pour recyclage peuvent inclure également des produits de récupération et/ou de collecte provenant des différentes étapes de la fabrication du produit intermédiaire et/ou de son utilisation ultérieure, tels que le scrap de récupération ou le scrap de production.

L'invention s'applique de préférence au cas où le premier élément anti-recristallisant est du chrome (Cr) et le deuxième élément anti-recristallisant est du zirconium (Zr). L'invention est également applicable au cas inverse où le premier élément anti-recristallisant est du zirconium et le deuxième élément anti-recristallisant est du chrome.

La demanderesse a constaté que, contre toute attente, il était possible de recycler directement des lots comprenant essentiellement des chutes et copeaux d'usinage en alliages de la série 7000, mais de composition moyenne aléatoire, dans le cadre d'un procédé relativement simple, sans qu'apparaissent des dérives de la composition des produits transformés, moyennant l'introduction d'au moins une étape de raffinage lors de l'élaboration du métal au titre. Elle a également noté avec surprise qu'il était possible de raffiner partiellement, et sélectivement, un alliage aussi chargé qu'un alliage de la série 7000.

Le procédé de l'invention ne nécessite pas de classement des chutes et copeaux par alliage ; il est suffisant que les chutes et copeaux (et plus généralement des produits pour recyclage) proviennent de la série 7000, même si la composition des alliages de cette série diffère de manière significative. Ceci permet de recycler ensemble des produits pour recyclage en différents alliages de la série 7000.

De surcroît, le procédé permet de recycler facilement des chutes et copeaux en alliages de la série 7000 même si la composition moyenne des approvisionnements varie considérablement, ce qui est normalement le cas puisqu'elle dépend des quantités respectives de produits intermédiaires en différents alliages utilisées dans l'usine et de la fraction des produits intermédiaires rejetée sous forme de chutes et copeaux.

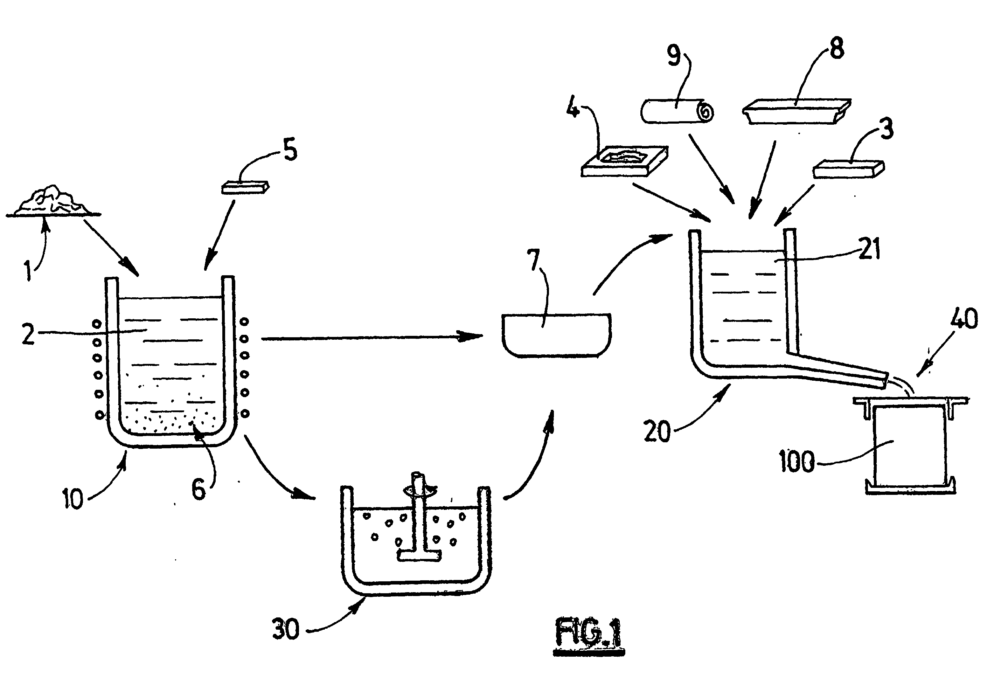

La figure 1 illustre un mode de réalisation préféré du procédé de l'invention.
La figure 2 illustre une variante de ce mode de réalisation.

### Description détaillée de l'invention

Selon l'invention, le procédé de fabrication d'un produit intermédiaire (100), tel qu'une plaque de laminage, une billette de filage, un bloc de forge ou un lingot, en un alliage déterminé de la série 7000 de l'Aluminium Association ou de la norme européenne EN 573-3 (ou de toute autre spécification), ci-après dénommée "série 7000", ledit alliage déterminé ayant une teneur visée en au moins un premier élément anti-recristallisant, dit "élément Z1", choisi dans le groupe constitué de Zr et Cr, est caractérisé en ce qu'il comprend :
- l'approvisionnement en produits pour recyclage (scrap) (1), tels que des chutes et copeaux d'usinage, comprenant des produits pour recyclage (scrap) en différents alliages de la série 7000 incluant au moins un deuxième alliage de la série 7000 ayant une teneur visée en au moins un deuxième élément anti-recristallisant, dit "élément Z2", choisi dans le groupe constitué de Zr et Cr, supérieure à la teneur maximale acceptée dans ledit alliage déterminé ;
- au moins une étape de raffinage desdits produits pour recyclage (scrap) (1) permettant de réduire la teneur en ledit deuxième élément anti-recristallisant Z2 jusqu'à une valeur inférieure à la teneur maximale acceptée dans ledit alliage déterminé ;
- l'élaboration d'un lot de métal liquide au titre (21) dont une partie provient du métal épuré (7) issu du raffinage ;
- la formation dudit produit intermédiaire (100) par coulée (40) dudit métal liquide au titre (21).

A l'étape d'approvisionnement, les produits pour recyclage (ou « scrap ») peuvent être approvisionnés sous différentes formes, notamment sous forme de produits divisés en vrac (c'est-à-dire tels que récupérés des postes d'usinage ou des stocks) et/ou sous forme de produits ayant subi au moins une première transformation, telle qu'un compactage (de manière à produire, par exemple, des "briques") ou une fusion (de manière à produire, par exemple, des "bols", c'est-à-dire de grands lingots de refusion d'une masse unitaire de l'ordre d'une demi-tonne). Cette première transformation peut permettre de simplifier le transport, la manutention et/ou le stockage des produits intermédiaires, notamment des chutes et copeaux.

L'invention s'applique tout particulièrement au cas où l'alliage déterminé est un alliage 7075 ou 7175, dont l'élément anti-recristallisant est le chrome, auquel cas le deuxième alliage peut être un alliage 7010, 7050, 7040, 7150, 7449 ou 7055 dont l'élément anti-recristallisant est le zirconium. Dans le cas inverse, l'alliage déterminé peut être un alliage 7010, 7050, 7040, 7055, 7449 ou 7150, et le deuxième alliage peut être un alliage 7075, 7175, 7475 ou 7349. Les produits pour recyclage (scrap) peuvent contenir plus de deux alliages.

L'invention est surtout intéressante lorsque 10 à 90 % des produits pour recyclage ont la composition dudit deuxième alliage. En effet, les produits pour recyclage contenant moins de 10 % de produits pour recyclage ayant la composition dudit deuxième alliage présentent le plus souvent une teneur moyenne en élément Z2 inférieure à la valeur maximale admise pour l'alliage déterminé. D'autre part, lorsque plus de 90 % des produits pour recyclage ont la composition dudit deuxième alliage, il est alors préférable de les utiliser pour la production d'un alliage déterminé plus proche, c'est-à-dire pour la production d'un alliage ayant au moins le même élément anti-recristallisant de base.

En pratique, les produits pour recyclage, et notamment les chutes et copeaux d'usinage, provenant de l'industrie aéronautique peuvent contenir en plus une part significative de produits pour recyclage en alliages autres que ceux de la série 7000, typiquement des alliages de la série 2000 tels que le 2024. De tels produits pour recyclage peuvent également être utilisés dans le procédé selon l'invention, dans la limite où la proportion des alliages "contaminants" est relativement faible, à savoir inférieure à 20 % environ, et de préférence inférieure à 10 %.

En pratique, il est avantageux d'effectuer une analyse chimique des produits pour recyclage (1) afin d'en déterminer la composition moyenne et de le recycler dans un alliage déterminé de composition la plus proche possible. Cette étape peut consister à effectuer une fusion préalable d'un lot de produits pour recyclage et à analyser le métal obtenu, éventuellement après une étape de solidification intermédiaire qui permet de produire des bols (7) de composition identifiée. Cette analyse présente un intérêt particulier lorsque l'on cherche à obtenir des alliages dont la teneur en certains éléments (tels que Fe et Si) est plus faible que ne l'exigent les normes.

Dans un lot donné de métal liquide au titre (21), la part de métal issue de métal recyclé (1) (c'est-à-dire des produits pour recyclage) est typiquement au moins égale à 10 % en poids. Le reste provient d'autres produits à base d'aluminium (4, 8, 9) et des éléments d'alliages (3) ajoutés pour corriger le titre du métal liquide (21). Les éléments d'alliages (3) sont généralement ajoutés sous forme d'alliages d'aluminium fortement alliés en un seul élément ou contenant ces éléments ou sous forme de métaux purs d'addition. Les différentes formes utilisées pour ajouter des éléments d'alliage sont connues sous le sigle "AMMA" qui signifie "alliages mères et métaux d'addition".

Lesdits produits à base d'aluminium sont typiquement, d'une part, des produits recyclés de grande dimension (4) (tels que des chutes) en alliage de la série 7000 dont la composition est connue, d'autre part, des produits internes à l'usine (9) en alliage de la série 7000 dont la teneur en élément anti-recristallisant Z1 est de préférence inférieure à la teneur visée, et, enfin, des produits (8) en aluminium dit "neuf' (c'est-à-dire en aluminium dit "pur" ou faiblement allié contenant typiquement plus de 99,8 % d'aluminium), typiquement sous forme de lingots, dont la teneur en les éléments anti-recristallisants Z1 et Z2 est de préférence inférieure à 100 ppm en poids. La part des apports en produits en alliages de la série 7000 (4, 9) est typiquement supérieure à 65 %, de façon à garantir en pratique le recyclage continuel de la production de chutes et rebuts de fabrication interne à l'usine. La part de métal issue de métal recyclé est choisie de manière à assurer une grande stabilité de la composition du métal au titre (21) qui pourrait subir des dérives lentes et difficiles à inverser.

Les produits pour recyclage, et notamment les chutes et copeaux d'usinage, peuvent être constitués essentiellement d'excédents divisés, ou de chutes de découpe ou autres morceaux de petite dimension dont la taille ne permet pas un tri rigoureux et une séparation des titres ou alliages, c'est-à-dire pour lesquels il est normalement difficile d'assurer la traçabilité de la composition. Un lot particulier de chutes et copeaux d'usinage peut être constitué d'un mélange de copeaux, de chutes de découpe et autres morceaux de petite dimension. Les morceaux de grande dimension sont de préférence extraits des chutes et copeaux, analysés et recyclés différemment. En pratique, la composition des morceaux de grande dimension est souvent connue grâce à une plus grande traçabilité de ces produits, ce qui permet de les recycler séparément. Mais la présente invention permet de traiter également du scrap contenant des morceaux de grande dimension, ou consistant essentiellement en des morceaux de grande dimension.

Dans un mode de réalisation préféré de l'invention, ladite au moins une étape de raffinage comprend :
- la fusion d'un lot de produits pour recyclage (1) dans un premier four de fusion (10), de manière à produire une masse de métal liquide de première refusion, dit "métal liquide brut", (2), de préférence sensiblement homogène ;
- la précipitation d'au moins un des éléments anti-recristallisants à l'aide d'un agent précipitant sélectif (5) comprenant du bore, de manière à réduire la teneur moyenne dudit métal liquide brut (2) en cet élément à une valeur inférieure ou égale à un seuil déterminé ;
- la séparation du métal liquide brut (2) et des produits de précipitation (ou "précipités") (6), de manière à obtenir un métal épuré (7) ayant une teneur en l'élément précipité inférieure ou égale au seuil déterminé.

La demanderesse a constaté que la cinétique de précipitation des éléments anti-recristallisants, qui, de manière surprenante, est de l'ordre de quelques dizaines de minutes seulement (plutôt que quelques heures), est en fait compatible avec le cycle de fusion d'une usine de transformation.

Ledit agent précipitant sélectif (5) est de préférence un alliage mère au bore, tel que de l'AB4, ou une poudre compactée d'aluminium et de bore, ou encore un sel de bore tel que le fluoroborate de potassium. Typiquement, lorsque ledit agent précipitant est un alliage mère, cet agent est introduit dans la masse liquide sous forme de plaquettes. Lorsque l'élément Z2 est du Zr, la quantité équivalente de bore ajoutée Q est de préférence comprise entre 0,25 et 1,0 fois la teneur en Zr, exprimée en ppm en poids, dudit métal liquide brut (2). Lorsque l'élément Z2 est du Cr, la quantité équivalente de bore ajoutée Q est de préférence égale à la somme d'une première quantité Q1 et d'une seconde quantité Q2 (i.e. Q = Q1 + Q2), la quantité Q1 étant comprise entre 0,25 et 1,0 fois la teneur en Zr dudit métal liquide brut (2) et la quantité Q2 étant comprise entre 0,45 et 1,8 fois la teneur en Cr dudit métal liquide brut (2), lesdites teneurs étant exprimées en ppm en poids. Dans ce dernier cas, une quantité de bore supplémentaire est nécessaire afin de tenir compte du fait que l'affinité du bore est plus grande pour Zr que pour Cr, de sorte que le bore réagit avec Zr avant de réagir avec Cr (i.e. la réaction produit des précipités de ZrB2 avant de produire des précipités de CrB2).

Le premier four de fusion (10) est avantageusement un four à induction, ce qui permet une dissolution efficace et rapide de l'agent précipitant (5) grâce au brassage électromagnétique de la masse de métal liquide induit par le four. Dans une autre variante de l'invention, le premier four de fusion peut être un four à bassin. Le four à induction et le four à bassin présentent l'avantage de produire une faible perte au feu. Toutefois, la présente invention n'est pas limitée à l'utilisation d'un type de four spécifique.

La valeur dudit seuil déterminé est de préférence inférieure ou égale à la teneur maximale en le deuxième élément anti-recristallisant Z2 dudit alliage déterminé. Un tel choix permet de limiter sensiblement, voire d'éviter, l'ajout d'aluminium pur ou faiblement allié (ou aluminium "neuf') lors de la mise au titre du métal liquide (21).

La température dudit métal liquide brut (2) durant l'opération de précipitation sélective est de préférence supérieure à 700 °C, de façon à favoriser la dissolution de l'agent précipitant sélectif (5).

La séparation du métal (2) et des précipités (6) est obtenue par décantation à une température de préférence inférieure à 700 °C et supérieure à 660 °C de façon à favoriser la croissance des précipités, à sélectionner la précipitation et à limiter l'augmentation de la viscosité, auquel cas la viscosité de la masse liquide est réduite et la décantation plus rapide.

Dans une variante avantageuse de ce mode de réalisation, le procédé comprend en outre un traitement au gaz (30) du métal épuré (7) pour éliminer les inclusions. Dans ce cas, il est avantageux d'effectuer la décantation dans la poche de traitement au gaz, ce qui permet de combler les temps d'attente du procédé, c'est-à-dire que la poche peut agir alors comme une réserve tampon. Le gaz (30) comprend de préférence du chlore, de manière à favoriser notamment la coalescence des germes de ZrB2 et/ou CrB₂ et leur élimination. Typiquement, la proportion de chlore est égale à 7 % environ, le reste étant typiquement constitué d'azote ou d'argon.

Ledit métal épuré (7) peut être coulé sous forme de bols ou de lingots avant d'être utilisé dans l'élaboration dudit métal liquide au titre (21).

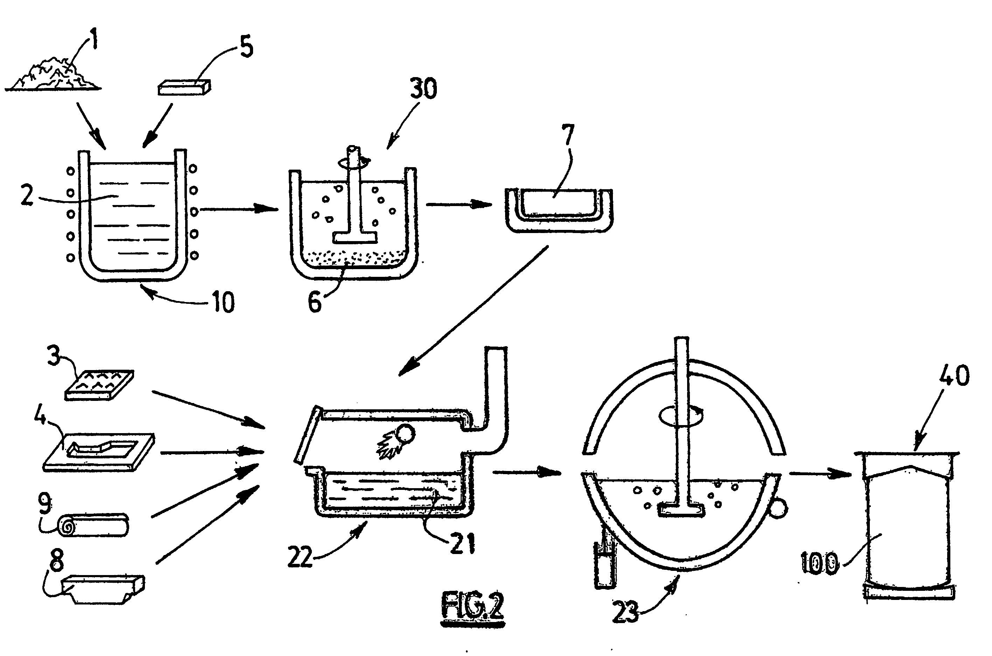

En pratique, tel qu'illustré à la figure 2, la mise au titre du métal liquide (21) est de préférence effectuée dans un deuxième four de fusion (22), et la coulée du produit (100) est effectuée à partir d'un four de maintien (23).

Selon une variante avantageuse du mode de réalisation préféré de l'invention, illustrée à la figure 2, l'élaboration du métal liquide au titre (21) comprend en outre une opération de dégazage du métal au titre avant la coulée, qui est effectuée de préférence dans le four le maintien (23).

### Exemples

Des essais de fabrication de produits intermédiaires à partir de chutes et copeaux d'usinage de produits en alliages d'aluminium aéronautiques ont été réalisés. Partant d'une livraison de deux camions de chutes et copeaux d'usinage en vrac, d'un poids total net de 52740 kg, un échantillon de 23 tonnes a été prélevé et traité selon l'invention. Les chutes et copeaux, essentiellement des copeaux, se présentaient sous forme de bottes de briques (chaque brique ayant comme dimensions approximatives de 22 cm x 22 cm x 30 cm et un poids unitaire moyen approximatif de 18 kg). Les copeaux étaient assez grossiers et peu huileux. Les copeaux ont été fondus dans un four à induction et traités à l'AB4 par introduction de 2 plaquettes d'AB4 (soit 12 kg) par tonne enfournée. La température de fin de fusion était de 740°C afin d'obtenir une température de l'ordre de 700 °C dans la poche durant le début de la phase de précipitation et de décantation. Après un temps de décantation de 40 minutes environ, un échantillon de métal liquide a été prélevé près de la surface et analysé, ce qui a permis de vérifier que la teneur en Zr était inférieure à 100 ppm. Une valeur comparable a été observée dans les bols coulés à partir de ce métal lorsque le temps de décantation était supérieur à environ 8 heures. Le chrome et le titane contenus dans le métal brut étaient également consommés par réaction avec le bore et atteignaient des teneurs également proches de 100 ppm. Il a été observé que le rendement de dissolution de l'AB4 était excellent dans le four à induction.

Un lot de 26 bols (7) d'un poids unitaire moyen de 900 kg a été produit, à partir de cet échantillon, par coulée dans un moule.

La composition de ces bols a été déterminée par analyse chimique. Elle était en moyenne comme suit (en % pondéral) : Si = 0,07 ; Fe = 0,12 ; Cu = 1,85 ; Mn = 0,06 ; Mg = 2,00 ; Cr = 0,10 ; Zn = 5,10 ; Ti = 0,03 ; Zr = 0,06. La composition des bols d'une coulée à l'autre varie de 10 % au plus autour de ces valeurs. Une telle composition a permis d'estimer que l'échantillon de chutes et copeaux était composé d'au moins 3 alliages dans les proportions suivantes : 48 ± 7 % de 7010, 45 ± 7 % de 7X75 (où il n'a pu être déterminé si X était égal à 0, 1 ou 4) et 7 ± 1 % de 2024. La quantité de manganèse introduite par la présence de l'alliage 2024 n'a pas nui au recyclage de ces chutes et copeaux dans un alliage de la série 7000. En l'espèce, une partie de l'échantillon a été utilisée pour l'élaboration d'un produit en 7075, suivant le mode de réalisation préféré du procédé de l'invention.

Les bols ainsi préparés ont été utilisés pour élaborer 125,7 tonnes de métal de composition 7175 destiné à la fabrication de tôles fortes. Le métal au titre comprenait en moyenne 18,5 % de bols de métal recyclé et 57,1 % de chutes de fabrications, le complément étant constitué d'éléments d'alliage ajoutés et d'aluminium neuf (8).

Le métal au titre a été transféré dans un four de coulée. Trois coulées de 8 plaques (370 x 1450 x 3700 mm) ont été coulées à partir de ce métal.

La demanderesse n'a pas mesuré de quantités anormales d'inclusions au bore. Elle attribue ce résultat surprenant au fait que le raffinage du métal recyclé est réalisé en amont de la phase d'élaboration du métal proprement dite.

### Avantages de l'invention

Le procédé selon l'invention présente l'avantage de permettre la fabrication d'un produit intermédiaire en un alliage déterminé quelconque de la série 7000 à partir d'une composition quelconque de produits pour recyclage, et notamment de chutes et copeaux, provenant de la transformation de produits en différents alliages de la série 7000, et contenant éventuellement une faible quantité d'alliages d'une autre série, telle que la série 2000. En d'autres termes, le procédé selon l'invention permet de recycler des produits pour recyclage dont la teneur moyenne en chrome et zirconium peut varier considérablement d'un lot à l'autre (éventuellement jusqu'à un facteur dix dans les cas les plus extrêmes) en raison des grandes différences de teneur en éléments anti-recristallisants des alliages de la série 7000.

Le procédé selon l'invention présente également l'avantage de ne pas nécessiter un apport important de métal autre que celui provenant des produits pour recyclage eux-mêmes, tel qu'un métal de base ayant une composition proche du titre ou un métal à base d'aluminium pur ou faiblement allié ayant alors un effet de dilution. En effet, un tel apport de métal complémentaire augmente les coûts de fabrication et limite la capacité de recyclage des procédés industriels.

## Revendications

1. Procédé de fabrication d'un produit intermédiaire (100), tel qu'une plaque de laminage, une billette de filage, un bloc de forge ou un lingot, en un alliage déterminé de la série 7000, ledit alliage déterminé ayant une teneur visée en au moins un premier élément anti-recristallisant, dit "élément Z1", choisi dans le groupe constitué de Zr et Cr, ledit procédé étant **caractérisé en ce qu'**il comprend :
• l'approvisionnement en produits pour recyclage (1) comprenant des produits pour recyclage en différents alliages de la série 7000 incluant au moins un deuxième alliage de la série 7000 ayant une teneur visée en au moins un deuxième élément anti-recristallisant, dit "élément Z2", choisi dans le groupe constitué de Zr et Cr, supérieure à la teneur maximale acceptée dans ledit alliage déterminé ;
• au moins une étape de raffinage desdits produits pour recyclage (1) permettant de réduire la teneur en ledit deuxième élément anti-recristallisant jusqu'à une valeur inférieure à la teneur maximale acceptée dans ledit alliage déterminé ;
• l'élaboration d'un lot de métal liquide au titre (21) dont une partie provient du métal épuré (7) issu du raffinage ;
• la formation dudit produit intermédiaire (100) par coulée (40) dudit métal liquide au titre (21).

2. Procédé selon la revendication 1, dans lequel ledit premier élément anti-recristallisant est du chrome et ledit deuxième élément anti-recristallisant est du zirconium.

3. Procédé selon la revendication 2, dans lequel l'alliage déterminé est choisi dans le groupe constitué des alliages 7075 et 7175, et le deuxième alliage est choisi dans le groupe constitué des alliages 7010, 7050, 7040, 7150, 7449 et 7055.

4. Procédé selon la revendication 1, dans lequel ledit premier élément anti-recristallisant est du zirconium et ledit deuxième élément anti-recristallisant est du chrome.

5. Procédé selon la revendication 4, dans lequel l'alliage déterminé est choisi dans le groupe constitué des alliages 7010, 7050, 7055, 7040, 7449 et 7150, et le deuxième alliage est choisi dans le groupe constitué des alliages 7075, 7175, 7475 et 7349.

6. Procédé selon l'une quelconque des revendications 1 à 5, dans lequel 10 à 90 % des produits pour recyclage ont la composition dudit deuxième alliage.

7. Procédé selon l'une quelconque des revendications 1 à 6, dans lequel, dans un lot donné de métal liquide au titre (21), la part de métal issue des produits pour recyclage (1) est au moins égale à 10 % en poids.

8. Procédé selon l'une quelconque des revendications 1 à 7, dans lequel l'élaboration du métal au titre (21) comprend l'introduction de produits à base d'aluminium choisis dans le groupe constitué des produits en aluminium neuf, des alliages mères et métaux d'addition (AMMA), des produits en alliages de la série 7000.

9. Procédé selon l'une quelconque des revendications 1 à 8, dans lequel l'élaboration du métal au titre (21) comprend l'introduction de produits en alliages de la série 7000 à hauteur de plus de 65 %.

10. Procédé selon l'une quelconque des revendications 1 à 9, dans lequel ladite au moins une étape raffinage comprend :
- la fusion d'un lot de produits pour recyclage (1) dans un premier four de fusion (10), de manière à produire une masse de métal liquide de première refusion, dit "métal liquide brut", (2) ;
- la précipitation d'au moins un des éléments anti-recristallisants à l'aide d'un agent précipitant sélectif (5) comprenant du bore, de manière à réduire la teneur moyenne dudit métal liquide brut (2) en cet élément à une valeur inférieure ou égale à un seuil déterminé ;
- la séparation du métal liquide (2) et des produits de précipitation (6), de manière à obtenir un métal épuré (7) ayant une teneur en l'élément précipité inférieure ou égale au seuil déterminé.

11. Procédé selon la revendication 10, dans lequel ledit premier four de fusion est un four à induction.

12. Procédé selon la revendication 10, dans lequel ledit premier four de fusion est un four à bassin.

13. Procédé selon l'une quelconque des revendications 10 à 12, dans lequel ledit agent précipitant sélectif (5) est un alliage mère à base de bore, tel que de l'AB4.

14. Procédé selon l'une quelconque des revendications 10 à 13, dans lequel, lorsque l'élément Z2 est du Zr, la quantité équivalente de bore ajoutée Q est comprise entre 0,25 et 1,0 fois la teneur en Zr, exprimée en ppm en poids, dudit métal liquide brut (2).

15. Procédé selon l'une quelconque des revendications 10 à 13, dans lequel, lorsque l'élément Z2 est du Cr, la quantité équivalente de bore ajoutée Q est égale à la somme d'une première quantité Q1 et d'une seconde quantité Q2, la quantité Q1 étant comprise entre 0,25 et 1,0 fois la teneur en Zr dudit métal liquide brut (2), la quantité Q2 étant comprise entre 0,45 et 1,8 fois la teneur en Cr dudit métal liquide brut (2) et lesdites teneurs étant exprimées en ppm en poids.

16. Procédé selon l'une quelconque des revendications 10 à 15, dans lequel ledit seuil est inférieur ou égal à la teneur maximale en le deuxième élément anti-recristallisant Z2 dudit alliage déterminé.

17. Procédé selon l'une quelconque des revendications 10 à 16, dans lequel la température dudit métal liquide brut (2) durant l'opération de précipitation sélective est supérieure à 700 °C.

18. Procédé selon l'une quelconque des revendications 10 à 17, dans lequel la séparation du métal liquide (2) et des produits de précipitation (6) est obtenue par décantation à une température comprise entre 660 °C et 700 °C.

19. Procédé selon l'une quelconque des revendications 10 à 18, comprenant en outre un traitement au gaz (30) du métal épuré (7) pour éliminer les inclusions.

20. Procédé selon la revendication 19, dans lequel ledit gaz comprend du chlore.

21. Procédé selon l'une quelconque des revendications 1 à 20, dans lequel la mise au titre du métal liquide (21) est effectuée dans un deuxième four de fusion (22), et la coulée du produit (100) est effectuée à partir d'un four de maintien (23).

22. Procédé selon l'une quelconque des revendications 1 à 21, dans lequel l'élaboration du métal liquide au titre (21) comprend en outre une opération de dégazage du métal au titre avant la coulée.

23. Procédé selon l'une quelconque des revendications 1 à 22, dans lequel lesdits produits pour recyclage sont constitués de scraps de production.

24. Procédé selon l'une quelconque des revendications 1 à 22, dans lequel lesdits produits pour recyclage sont essentiellement constitués de chutes et copeaux.

25. Procédé selon l'une quelconque des revendications 1 à 22, dans lequel lesdits produits pour recyclage comprennent des produits de récupération et/ou de collecte provenant des différentes étapes de la fabrication du produit intermédiaire et/ou de son utilisation ultérieure.

26. Procédé selon l'une quelconque des revendications 1 à 25, dans lequel les produits pour recyclage sont approvisionnés sous forme de produits divisés en vrac et/ou sous forme de produits ayant subi au moins une première transformation, telle qu'un compactage ou une fusion.

## Patentansprüche

1. Verfahren zur Herstellung eines Zwischenproduktes (100) wie z.B. eines Walzbarrens, eines Pressbarrens, eines Schmiedeblocks oder einer Massel aus einer bestimmten Legierung der Serie 7000, wobei die bestimmte Legierung einen Zielgehalt an mindestens einem rekristallisationshemmenden Element, einem sogenannten "Element Z1", gewählt aus der Gruppe bestehend aus Zr und Cr, aufweist, welches Verfahren **dadurch gekennzeichnet ist, dass** es umfasst:
• die Bereitstellung wiederverwertbarer Produkte (1) bestehend aus wiederverwertbaren Produkten aus verschiedenen Legierungen der Serie 7000, welche mindestens eine zweite Legierung der Serie 7000 umfassen, die einen Zielgehalt an mindestens einem zweiten rekristallisationshemmenden Element, einem sogenannten "Element Z2", gewählt aus der Gruppe bestehend aus Zr und Cr, aufweist, der höher ist als der akzeptierte Höchstgehalt in der bestimmten Legierung;
• mindestens einen Raffinationsschritt für die wiederverwertbaren Produkte, der es gestattet, den Gehalt an dem zweiten rekristallisationshemmenden Element bis auf einen Wert zu reduzieren, der geringer ist als der akzeptierte Höchstgehalt in der bestimmten Legierung;
• die Herstellung einer abgemessenen Menge Flüssigmetall mit dem genannten Gehalt (21), wovon ein Teil aus dem gereinigten Metall (7) aus der Raffination stammt;
• die Erzeugung des Zwischenproduktes (100) durch Abguss (40) des Flüssigmetalls mit dem genannten Gehalt (21).

2. Verfahren nach Anspruch 1, bei dem das erste rekristallisationshemmende Element Chrom ist und das zweite rekristallisationshemmende Element Zirkonium ist.

3. Verfahren nach Anspruch 2, bei dem die bestimmte Legierung aus der Gruppe bestehend aus den Legierungen 7075 und 7175 gewählt wird und die zweite Legierung aus der Gruppe bestehend aus den Legierungen 7010, 7050, 7040, 7150, 7449 und 7055 gewählt wird.

4. Verfahren nach Anspruch 1, bei dem das erste rekristallisationshemmende Element Zirkonium ist und das zweite rekristallisationshemmende Element Chrom ist.

5. Verfahren nach Anspruch 4, bei dem die bestimmte Legierung aus der Gruppe bestehend aus den Legierungen 7010, 7050, 7055, 7040, 7449 und 7150 gewählt wird und die zweite Legierung aus der Gruppe bestehend aus den Legierungen 7075, 7175, 7475 und 7349 gewählt wird.

6. Verfahren nach irgendeinem der Ansprüche 1 bis 5, bei dem 10 bis 90 % der wiederverwertbaren Produkte die Zusammensetzung der zweiten Legierung haben.

7. Verfahren nach irgendeinem der Ansprüche 1 bis 6, bei dem der aus den wiederverwertbaren Produkten (1) stammende Anteil an Metall in einer gegebenen abgemessenen Menge Flüssigmetall mit dem genannten Gehalt (21) mindestens 10 Gewichtsprozent beträgt.

8. Verfahren nach irgendeinem der Ansprüche 1 bis 7, bei dem die Herstellung des Metalls mit dem genannten Gehalt (21) die Einbringung von Produkten auf Basis von Aluminium umfasst, die aus der Gruppe bestehend aus den Produkten aus Neualuminium, den Vorlegierungen und Zusatzmetallen (AMMA), den Produkten aus Legierungen der Serie 7000 gewählt werden.

9. Verfahren nach irgendeinem der Ansprüche 1 bis 8, bei dem die Herstellung des Metalls mit dem genannten Gehalt (21) die Einbringung von Produkten aus Legierungen der Serie 7000 in Höhe von mehr als 65 % umfasst.

10. Verfahren nach irgendeinem der Ansprüche 1 bis 9, bei dem der mindestens eine Raffinationsschritt umfasst:
- das Erschmelzen einer abgemessenen Menge wiederverwertbarer Produkte (1) in einem ersten Schmelzofen (10), um eine erste flüssige Umschmelzmetallmasse, das sogenannte "flüssige Rohmetall" (2) zu erhalten;
- das Ausfällen mindestens eines der rekristallisationshemmenden Elemente mit Hilfe eines borhaltigen, selektiven Fällungsmittels (5), um den Durchschnittsgehalt des flüssigen Rohmetalls (2) an diesem Element auf einen Wert herabzusetzen, der kleiner oder gleich einem bestimmten Schwellwert ist;
- das Abtrennen des Flüssigmetalls (2) und der ausgefällten Produkte (6), um ein gereinigtes Metall (7) zu erhalten, dessen Gehalt an dem ausgefällten Element kleiner oder gleich dem bestimmten Schwellwert ist.

11. Verfahren nach Anspruch 10, bei dem der erste Schmelzofen ein Induktionsofen ist.

12. Verfahren nach Anspruch 10, bei dem der erste Schmelzofen ein Wannenofen ist.

13. Verfahren nach irgendeinem der Ansprüche 10 bis 12, bei dem das selektive Fällungsmittel (5) eine Vorlegierung auf Basis von Bor ist, wie z.B. AB4.

14. Verfahren nach irgendeinem der Ansprüche 10 bis 13, bei dem, wenn das Element Z2 Zr ist, die zugegebene äquivalente Bormenge Q dem 0,25- bis 1,0-fachen Zr-Gehalt, ausgedrückt in Gew.ppm, des flüssigen Rohmetalls (2) entspricht.

15. Verfahren nach einem der Ansprüche 10 bis 13, bei dem, wenn das Element Z2 Cr ist, die zugegebene äquivalente Bormenge Q gleich der Summe einer ersten Menge Q1 und einer zweiten Menge Q2 ist, wobei die Menge Q1 dem 0,25- bis 1,0-fachen Zr-Gehalt des flüssigen Rohmetalls (2) entspricht, die Menge Q2 dem 0,45- bis 1,8-fachen Cr-Gehalt des flüssigen Rohmetalls (2) entspricht und die genannten Gehalte in Gew.ppm ausgedrückt sind.

16. Verfahren nach irgendeinem der Ansprüche 10 bis 15, bei dem der Schwellwert kleiner oder gleich dem Höchstgehalt an dem zweiten rekristallisationshemmenden Element Z2 der bestimmten Legierung ist.

17. Verfahren nach einem der Ansprüche 10 bis 16, bei dem die Temperatur des flüssigen Rohmetalls (2) während des selektiven Fällungsvorgangs mehr als 700 °C beträgt.

18. Verfahren nach irgendeinem der Ansprüche 10 bis 17, bei dem die Abtrennung des Flüssigmetalls (2) und der ausgefällten Produkte (6) durch Dekantieren bei einer Temperatur zwischen 660 °C und 700 °C erfolgt.

19. Verfahren nach irgendeinem der Ansprüche 10 bis 18, welches zusätzlich eine Gasbehandlung (30) des gereinigten Metalls (7) zur Beseitigung von Einschlüssen umfasst.

20. Verfahren nach Anspruch 19, bei dem das Gas Chlor enthält.

21. Verfahren nach irgendeinem der Ansprüche 1 bis 20, bei dem die Einstellung des Flüssigmetallgehaltes (21) in einem zweiten Schmelzofen (22) erfolgt und der Abguss des Produktes (100) aus einem Warmhalteofen (23) erfolgt.

22. Verfahren nach irgendeinem der Ansprüche 1 bis 21, bei dem die Herstellung des Flüssigmetalls mit dem genannten Gehalt (21) zusätzlich eine Entgasung des Metalls mit dem genannten Gehalt vor dem Abguss umfasst.

23. Verfahren nach irgendeinem der Ansprüche 1 bis 22, bei dem die wiederverwertbaren Produkte aus Produktionsschrott bestehen.

24. Verfahren nach irgendeinem der Ansprüche 1 bis 22, bei dem die wiederverwertbaren Produkte im Wesentlichen aus Resten und Spänen bestehen.

25. Verfahren nach irgendeinem der Ansprüche 1 bis 22, bei dem die wiederverwertbaren Produkte Rückgewinnungs- und/oder Abfangprodukte umfassen, die aus den verschiedenen Schritten der Herstellung des Zwischenproduktes und/oder seiner späteren Verwendung stammen.

26. Verfahren nach irgendeinem der Ansprüche 1 bis 25, bei dem die wiederverwertbaren Produkte in Form von stückig zerteilten Produkten und/oder in Form von solchen Produkten bereitgestellt werden, die mindestens einer ersten Verarbeitung wie z.B. einer Kompaktierung oder Erschmelzung unterworfen wurden.

## Claims

1. Manufacturing process of an intermediate product (100) such as a rolling ingot, extrusion billet, forging block or ingot, made of a specified 7000 series alloy, with said specified alloy having a target content of at least one first anti-recrystallising element, referred to as "element Z1", selected from the group consisting of Zr and Cr, with said process **characterised in that** it comprises:
• the supply of scrap (1) comprising scrap made of different 7000 series alloys including at least one second 7000 series alloy having a target content of at least one second anti-recrystallising element, referred to as "element Z2", selected from the group consisting of Zr and Cr, greater than the maximum accepted content in said specified alloy;
• at least one refining step of said scrap (1) to reduce the content of said second anti-recrystallising element to a value below the maximum accepted content in said specified alloy;
• the production of a batch of liquid metal having nominal composition (21), of which a part originates from the purified metal (7) obtained through the refining step;
• the formation of said product (100) by casting (40) said metal having nominal composition (21).

2. Process according to claim 1, wherein said first anti-recrystallising element is chromium and said second anti-recrystallising element is zirconium.

3. Process according to claim 2, wherein the specified alloy is selected from the group consisting of 7075 and 7175 alloys, and the second alloy is selected from the group consisting of 7010, 7050, 7040, 7150, 7449 and 7055 alloys.

4. Process according to claim 1, wherein said first anti-recrystallising element is zirconium and said second anti-recrystallising element is chromium.

5. Process according to claim 4, wherein the specified alloy is selected from the group consisting of 7010, 7050, 7055, 7040 7449 and 7150 alloys, and the second alloy is selected from the group consisting of 7075, 7175, 7475 and 7349 alloys.

6. Process according to any of claims 1 to 5, wherein the composition of 10 to 90% of the scrap is that of said second alloy.

7. Process according to any of claims 1 to 6, wherein, in a given batch of liquid metal having nominal composition (21), the proportion of metal obtained from scrap (1) is at least equal to 10% by weight.

8. Process according to any of claims 1 to 7, wherein the production of the metal having nominal composition (21) comprises the introduction of aluminium-based products selected from the group consisting of new aluminium products, master alloys and added metals (MAAM) and 7000 series alloy products.

9. Process according to any of claims 1 to 8, wherein the production of the metal having nominal composition (21) comprises the introduction of 7000 series alloy products at a rate of over 65%.

10. Process according any of claims 1 to 9, wherein said at least one refining step comprises:
- the melting of a batch of scrap (1) in a first melting furnace (10), to obtain a first remelting liquid metal mass, referred to as the "unprocessed liquid metal" (2);
- the precipitation of at least one of the anti-recrystallising elements using a selective precipitating agent (5) comprising boron, to reduce the average content of this element in said unprocessed liquid metal (2) to a value less than or equal to a specified limit;
- the separation of the liquid metal (2) and the precipitation products (6), to obtain a purified metal (7) with a precipitated element content less than or equal to the specified limit.

11. Process according to claim 10, wherein said first melting furnace is an induction furnace.

12. Process according to claim 10, wherein said first melting furnace is a side well reverbatory furnace.

13. Process according to any of claims 10 to 12, wherein the said selective precipitating agent (5) is a boron-based master alloy, such as AB4.

14. Process according to any of claims 10 to 13 wherein, when the element Z2 is Zr, the equivalent quantity Q of boron added is between 0.25 and 1.0 times the Zr content, expressed in ppm by weight, of said unprocessed liquid metal(2).

15. Process according to any of claims 10 to 13 wherein, when the element Z2 is Cr, the equivalent quantity Q of boron added is equal to the sum of a first quantity Q1 and a second quantity Q2, quantity Q1 being between 0.25 and 1.0 times the Zr content of said unprocessed liquid metal (2), quantity Q2 being between 0.45 and 1.8 times the Cr content of said unprocessed liquid metal (2), said contents being expressed in ppm per weight.

16. Process according to any of claims 10 to 15, wherein said limit is less than or equal to the maximum content of the second anti-recrystallising element Z2 in said specific alloy.

17. Process according to any of claims 10 to 16, wherein the temperature of said unprocessed liquid metal (2) during the selective precipitation operation is greater than 700°C.

18. Process according to any of claims 10 to 17, wherein the separation of the liquid metal (2) and the precipitation products (6) is obtained by decanting at a temperature of between 660°C and 700°C.

19. process according to any of the claims 10 to 18 also comprising a gas treatment (30) of the purified metal (7) to eliminate inclusions.

20. Process according to claim 19, wherein said gas comprises chlorine.

21. Process according to any of claims 1 to 20, wherein the correction of the liquid metal (21) composition is performed in a second melting furnace (22), and the casting of the product (100) is performed using a holding furnace (23).

22. Process according to any of claims 1 to 21, wherein the production of liquid metal having nominal composition (21) also comprises a degassing process of the liquid metal having nominal composition before casting.

23. Process according to any of claims 1 to 22, wherein said scrap is supplied in the form of production scraps.

24. Process according to any of claims 1 to 22, wherein said scrap consists essentially of chips and cuttings.

25. Process according to any of claims 1 to 22, wherein said scrap includes reclaimed and/or collected products originating from different stages of the manufacture of the intermediate product and/or its final use.

26. Process according to any of claims 1 to 25, wherein the scrap is supplied in the form of bulk piecemeal and/or in the form of products having undergone at least initial processing, such as compacting or melting.
